# EUROPEAN PATENT APPLICATION

(11) **EP 1 187 500 A1**
(43) Date of publication of application: **13.03.2002**
(21) Application number: 00440239.2
(22) Date of filing: 07.09.2000
(51) Int. Cl.: H04Q 7/22

(54) **Method for controlling a logical link between a terminal and a fixed station in a wireless multiple access communication system and corresponding fixed station**

(71) Applicant: ALCATEL, 75008 Paris (FR)
(72) Inventor: Lauro, Sylvain, F-94800 Villejuif (FR); Plateau, Jean-Laurent, F-28220 Romilly sur Aigre (FR)
(74) Representative: Urlichs, Stefan, Dipl.-Phys.

(57) **Abstract**

The invention relates notably to a method for controlling a logical link between a terminal and a fixed station of a wireless communication system, the terminal being assigned resources on an uplink shared channel of the wireless communication system for transmitting data packets when said logical link has been established, the terminal supporting a data traffic comprising inactivity periods.

According to the invention, the method consists in:
- starting a predefined timer, called logical link hold timer, when an inactivity period of said terminal is detected; and
- releasing said logical link if said inactivity period has not terminated upon expiration of said logical link hold timer.

## Description

The present invention relates to the field of telecommunications and more particularly to a method for controlling a logical link between a terminal and a fixed station in a wireless multiple access communication system.

More precisely, in the framework of this invention, the establishment of a logical link between a terminal and a fixed station of the wireless communication system is a precondition for the terminal to be assigned resources on a shared communication radio channel of the wireless communication system.

The term logical link refers to an abstract representation of connectivity between the terminal and the fixed station. Contrary to a physical link, a logical link does not imply that a physical channel is exclusively reserved for the communication between the terminal and the fixed station. That is why, complementary to a logical link establishment, a resource assignment procedure is required for the terminal to send data to the fixed station.

The term logical link control has to be understood in the framework of this invention as the control of the establishment and of the release of a logical link between a terminal and a fixed station. The fixed station is preferably responsible for the logical link control.

In the description below, the resources of the shared communication channel are preferably dynamically assigned to different users who need to access to the shared communication channel. An entity belonging to the wireless communication system, preferably a fixed station, manages the resource assignment to the user terminals under its coverage sharing the communication channel. The resource assignment method will not be further described. Usual resource assignment methods are known from those skilled in the art and it will also be apparent to them that the present invention is independent of the resource assignment method chosen.

The shared communication channel is preferably time-shared in the following description. However, code-sharing , frequency-sharing, or any combination of them is also compatible with the implementation of the present invention.

This method is usable in a large number of wireless multiple access systems enabling access to at least one type of shared channel. Non exhaustive examples are GPRS (Global Packet Radio Service), LMDS (Local Multipoint Distribution Services).

A common method for controlling the logical link of terminal to a wireless data communication system consists in establishing a logical link to the terminal when the terminal gets data to transmit in his previously empty transmit queue and in releasing the logical link as soon as the transmit queue at the terminal has been emptied. During the time period when the logical link is established the terminal is assigned resources on a shared communication channel authorizing him to send data packets on this resource.

US patent US-5,513,183 describes a mobile phone system multiplexing plural voice traffic channels on a single carrier using TDMA. The described method consists in assigning voice traffic capacity not on a conversational basis but on an informational spurt basis. When a voice terminal detects a speech spurt to send, it formulates a channel allocation request on a control channel. The fixed station look for available traffic slots in a pool and affects a free one to the terminal. The terminal tunes its transmitter on the affected traffic slot. When the terminal detects the termination of the speech spurt and enters an inactivity period, it informs the fixed station over a control channel. Upon reception of such a inactivity indication, the master station releases the traffic slot back to the pools of available traffic slots.

A disadvantage of this method is that the control channel required to convey the signaling information may be overloaded in case of a succession of short bursts separated by short silence period. A logical link must be established/released a high number of times between the terminal and the fixed station. This numerous logical link establishment release procedures are time consuming and may reduce dramatically the system performances especially in case of bursty traffic.

Another disadvantage of this solution is that the re-establishment procedure needs to be very fast in order to comply with the voice traffic delay constraints. The faster the re-establishment procedure, the larger the bandwidth reserved for this purpose should be to the detriment of the bandwidth reserved to data traffic.

A particular object of the present invention is to reduce the number of logical link establishment/release between a terminal and the fixed station in a wireless communication system.

This object, and others that appear below, are achieved by a method for controlling a logical link between a terminal and a fixed station of a wireless communication system according to claim 1.

The present invention also concerns a fixed station according to claim 5 and a terminal according to claim 7. Further advantageous features of the invention are defined in the dependent claims.

An advantage of the present invention is to keep the logical link established during a short time period, called logical link hold period, after a burst termination in case further bursts were to be transmitted during this short time period. This method reduces the transmission delay since it reduces the number of time consuming re-establishments of logical links.

Another advantage of the present invention is to better guaranty a certain quality of service. Indeed, by maintaining the connection established in case new data were to be transmitted, the user is less subject to delays caused by the usual call admission control procedure.

In a preferred embodiment of the method, the amount of resources allocated during the "logical link hold period" is configurable. It may preferably be reduced compared to the amount of resources allocated during the time where the mobile terminal has really data waiting for transmission.

Other characteristics and advantages of the invention will appear on reading the following description of a preferred implementation given by way of non-limiting illustrations, and from the accompanying drawings, in which:
- Figure 1 shows a part of a radio communication system in which the present invention can be used;
- Figure 2 illustrates a logical link control method according to the invention and the corresponding contents of the uplink channel (Fig. 2B, Fig 2C) for a scenario described in Fig 2A;
- Figure 3 shows an event diagram giving a possible implementation of the method according to the present invention at a base station of a radio communication system;
- Figure 4 represents an embodiment of a base station according to the present invention.

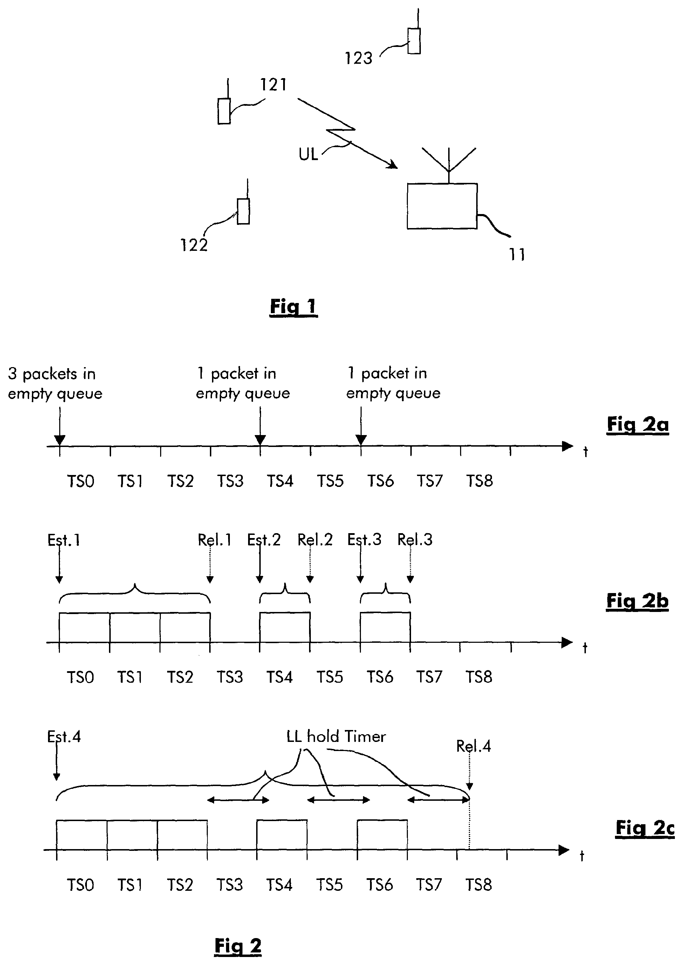

Figure 1 illustrates three mobile terminals 121, 122, 123 and a base station 11 part of a wireless communication system.

Mobile terminals 121, 122, 123 are situated in the coverage area of base station 11 and communicate with base station 11 on the uplink by sending data packets over the air interface on a shared radio communication channel UL. The shared radio communication channel UL is preferably a time-shared channel comprising a succession of time slots.

Logical links have to be established between base station 11 and the terminals before these terminals are allowed to transmit data on the shared communication channel UL. Base station 11 preferably establishes logical links with mobile terminal 121, 122, 123 upon request of mobile terminals. When a logical link is established with a mobile terminal 121, 122, 123, base station 11 transmits authorizations to this mobile terminal 121, 122, 123 according to a predefined resource assignment procedure. Base station 11 also takes care of releasing the logical link when it is no more necessary.

Mobile terminals 121, 122, 123 are supporting different types of traffics comprising activity as well as inactivity periods. An activity period is defined as a period of time during which a mobile terminal has data waiting for transmission in a transmit buffer. On the contrary, an inactivity period is a period during which a mobile terminal has no data waiting for transmission in the transmit buffer.

Most data services defined by their average bit rate and their peak bit rate belong to the class of services with activity and inactivity periods. Such services are unlikely to have a constant bit rate over a long period of time and are characterized by the transmission of bursts. Voice services where voice is packetized can also be considered as a traffic with activity and inactivity periods since a silence in the speech flow is a period where no information needs to be transmitted.

Figure 2A represents a scenario of bursty traffic at mobile terminal 121. This very simple scenario is defined as follows:
- Three data packets are entering the transmit queue of mobile terminal 121 at the beginning of time slot TS0.
- One data packet is entering the transmit queue at the beginning of time slot TS4.
- One data packet entering the transmit queue at the beginning of time slot TS6.
- Other mobile terminals have no data packets to transmit during the corresponding time period. As a consequence, logical link has only to be established with mobile terminal 121 and the resource assignment procedure only assigns transmission authorizations to mobile terminal 121 during this time period.
- A data packet corresponds to the amount of data that can be transmitted in a time slot on shared uplink channel. Uplink shared channel UL are divided in time slots TS0, ..., TS8 having a time slot duration TS.
- The delay for a logical link to be established or released as well as the propagation delay for transmission authorization is assumed to be negligible in this scenario. However more accurate scenario may take into account non negligible delay without modifying the core of the present invention.

Figure 2B represents the contents of uplink shared channel UL in prior art simulating the logical link control and the resource allocation for the scenario described in figure 2A.

At time TS0 data packets have entered a previously empty queue at mobile terminal 121. That corresponds to the beginning of an activity period at mobile terminal 121 and mobile terminal 121 sends a logical link establishment request to base station 121 on a channel reserved for this purpose. Base station 11 then triggers the establishment of a logical link Est.1 with mobile terminal 121.

Once the logical channel is established, base station 11 sends transmit authorizations to mobile terminals supposed to share the uplink channel. In this scenario mobile terminal 121 receives transmit authorizations for time slots TS0, TS1, TS2 to send the three data packets waiting for transmission in the transmit queue. At the end of TS2 the transmit queue at mobile terminal 121 is empty i.e. mobile terminal is entering an inactivity period.

The base station 11 is preferably informed on an inactivity period over signaling in that the mobile terminal sends an empty transmit queue indication when it has detected that its queue contains no more data to transmit. The base station 11 then triggers the release of the logical link Rel.1. The mechanism for detecting an inactivity period at a terminal may be implemented another way, for example by sending a predefined silence packet on the traffic channel.

Upon reception of a new data packet at time TS4 the logical link is reestablished Est.2 and released at the end of time slot TS4 Rel.2 after allocation of timeslot TS4 for transmitting the data packet on the uplink shared channel.

The same way, upon reception of a new data packet at time TS6 the logical link is reestablished Est.3 and released Rel.3 at the end of time slot TS6 after allocation of timeslot TS6 for transmitting the data packet on the uplink shared channel.

In the scenario presented on figure 2B and treated according to a prior art method, the logical link is established and released three times.

Fig 2C represents the contents of uplink channel UL according to the present invention simulating the logical link control and the resource allocation for the scenario shown on Fig 2A.

At the beginning of time slot TS0, data packets have entered a previously empty queue at mobile terminal 121. Base station 11 then triggers the establishment of a logical link Est.4 with mobile terminal 121.

Once the logical channel is established, base station 11 sends transmit authorizations to mobile terminals supposed to share the uplink channel. Mobile terminal 121 receives transmit authorizations for time slots TS0, TS1, TS2 to send the three data packets waiting for transmission in the transmit queue. At the end of TS2 the transmit queue at mobile terminal 121 is empty i.e. mobile terminal is entering an inactivity period IP1.

The two methods differs at the end of time slot TS2 when the transmit queue has been emptied after the transmission of the three data packets. When this inactivity period has been detected at base station 11, base station does not immediately triggers the release of the logical link. On the contrary the logical link remains established and a logical link hold timer is started.

If the beginning of a new activity period is detected before the expiration of logical link hold timer, the mobile terminal is directly assigned a resource for transmitting new data having entered its transmit queue.

Since the duration of inactivity period IP1 is shorter than the logical link hold timer duration, the logical link remains established until the transmission of the data packet in time slot TS4.

The same way, at the end of time slot TS4, the mobile terminal is entering an inactivity period IP2. Logical link hold timer T is started at the end of time slot TS4. Since new data packet are entering the transmission queue of mobile terminal 121 before the expiration of logical link hold timer T, the logical link is not released and mobile terminal is assigned a ressource for transmitting this new data packet in time slot TS6.

At the end of time slot TS6, the mobile terminal is entering an inactivity period IP3. Logical link hold timer T is started at the end of time slot TS6. Upon expiration of logical link timer, no further data packets have entered the transmit queue of mobile terminal 121, the logical link is then released Rel.4. In this scenario, the logical link has been established and released one single time.

In case more than one mobile terminal have simultaneously an activity period, it is the task of the base station 11 to establish logical link with the corresponding mobile terminals. After a logical link has been established it is the task of base station 11 to properly control the resource assignment mechanism for all active mobile terminal sharing the medium so that their requirements in term of quality of service are fulfilled.

The duration of logical link hold timer may be a constant time defined as a system parameter. Alternatively, the duration of logical link hold timer could preferably take in account the type of service supported by the mobile terminal entering an inactivity period as well as the quality of service requested by this mobile terminal.

In another embodiment, the duration of the logical link hold timer may be chosen dependant on the load of shared uplink channel or on the duration of the previous inactivity periods of the mobile terminal. Any other criterion for making the duration of the logical link hold timer dependant on traffic parameters may be envisaged by a person skilled in the art.

In a preferred embodiment, the fixed station may select a different resource assignment strategy when the logical link hold timer is active (ie inactivity period) as the resource assignment strategy used when the terminal is in activity. For example, the bit rate reserved for a terminal during an inactivity period should be reduced compared to the bit rate reserved for the terminal during an activity period. This flexible resource assignment method combined with the use of the logical link hold timer enables it to optimize the resource assignment among the different users sharing the uplink channel UL.

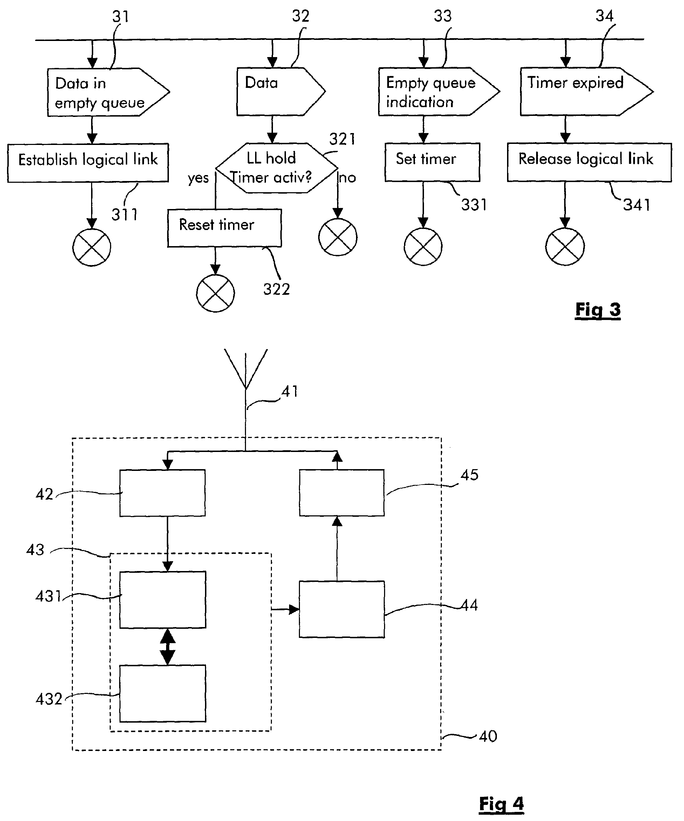

Figure 3 shows an event diagram giving a possible implementation of the method of the present invention at base station 11.

Four event types are handled at base station 11. The first event type 31 is the indication that a data packet has been received in a previously empty transmit queue at a mobile terminal, the second event type 32 is the reception of a data packet at base station 11, the third event type is the reception at base station 11 of an indication that a transmit queue has become empty at a mobile terminal and the fourth event type 34 is the logical link hold timer expiration.

Upon reception of an indication that data have entered a previously empty queue at a mobile terminal (Event 31), base station 11 triggers the establishment of a logical link (Step 311) with this mobile terminal which has entered an activity period. This procedure is not directly part of the invention and then will not be described in more details.

Upon reception of a traffic packet from a mobile terminal (Event 32), base station checks if logical link hold timer T has already been started for the logical link between this mobile terminal and the base station ( Step 321).
- If yes the timer is reset (Step 322).
- If no, no specific action is started. The received data are treated the conventional way.

Upon reception of an empty queue indication from a mobile terminal (Event 33), base station starts logical link hold timer for the logical link between this terminal and the base station (step 331).

Upon expiration of the logical link hold timer (Event 34), the base station initiates the release of the logical link to this terminal (step 341).

Figure 4 represents an embodiment of a base station 11 according to the present invention comprising an antenna 41, a receiver 42, a logical link control module 43, a resource assignment module 44 and a transmitter 45. Logical link controller 43 is responsible for establishing a logical link and releasing it and comprises a terminal activity/inactivity detector 431, a timer 432.

The contents of uplink channel UL described in fig 2C is received through antenna 41 at receiver 42 and transmitted to logical link controller 43. Logical link controller 43 checks the status of the logical link with the mobile terminal from which data or indication are received. Terminal activity /inactivity detector 431 is responsible for checking if a mobile terminal is currently entering an activity or an inactivity period.

In case the beginning of an activity period is detected, logical link controller 43 triggers the establishment of a logical link with the mobile terminal if no logical link is already active. For this purpose logical link controller 43 has access to a database storing all currently established logical links.

During an activity period of the mobile terminal and after having if necessary established a logical link with this mobile, logical link controller 43 triggers resource assignment module 44 for assigning resource to the mobile terminal according to a resource assignment method. Resource assignment module 44 determines in the framework of multiple access to a shared communication channel which mobile terminals need transmit authorizations. The resource assignment method is not further described here. Any usual resource assignment method could be adapted. The transmits authorization resulting from the resource assignment method are transmitted over transmitter 45 and antenna 41 to the appropriate mobile terminal.

Upon detection of the beginning of an inactivity period by activity/inactivity detector 431, this latter starts logical link hold timer 432. The duration of logical link hold timer may be a predefined constant value. Alternatively, logical link controller 43 may comprise a module for determining the duration of the logical link hold timer if this duration has to be set according to the quality of service required by the mobile terminal or according to the duration of previous inactivity periods at the mobile terminal. The expiration of logical link hold timer is mentioned to logical link controller 43 which release the corresponding logical link.

In another embodiment of the invention, the resource assignment module 44 gives at least one transmit authorization to a mobile terminal when this terminal is in an inactivity period and the logical link hold timer is active for this logical link. This has the advantage to give this mobile terminal the opportunity to transmit data that have entered the transmit queue of this terminal but which have not already be detected at the base station if the signaling message containing the indication that the terminal has entered a new activity period has not be received fast enough.

In another embodiment of the invention, logical link controller 43 can be located in the user terminal. In such a case, the user terminal itself supervises the activation of the logical link hold timer and triggers the logical link release when the logical link hold timer has expired.

## Claims

1. Method for controlling a logical link between a terminal (121, ..., 123) and a fixed station (11) of a wireless communication system, said terminal (121, ..., 123) being assigned resources on an uplink shared channel (UL) of said wireless communication system for transmitting data packets when said logical link has been established, said terminal (121, ..., 123) supporting a data traffic comprising inactivity periods (IP1, ..., IP3), said method being **characterized by** comprising the steps of:
- starting a predefined timer, called logical link hold timer, when an inactivity period (IP1, ..., IP3) of said terminal (121, ..., 123) is detected; and
- releasing said logical link if said inactivity period (IP1, ..., IP3) has not terminated upon expiration of said logical link hold timer.

2. Method according to claim 1, **characterized in that** it further comprises the step of:
- deactivating said logical link hold timer if the end of said inactivity period (IP1, ..., IP3) is detected before the expiration of said logical link hold timer.

3. Method according to claim 1, **characterized in that** it further comprises the step of:
- using a predefined resource assignment strategy for said terminal when said logical link hold timer is active.

4. Method according to claim 1, **characterized in that** the duration of said logical link hold timer depends on the quality of service requested by said terminal (121, ..., 123).

5. Fixed station (11) belonging to a wireless communication system comprising a logical link controller (43) for controlling a logical link between said fixed station and a terminal (121, ..., 123) of said wireless communication system, said fixed station (11) further comprising a resource assignment module (44) for assigning resources to said terminal (121, ..., 123) on an uplink shared channel (UL) when said logical link has been established, said fixed station (11) being **characterized in that** it further comprises:
- an inactivity detector (431) to detect an inactivity period (IP1, ..., 1P3)at said terminal (121, ..., 123);
- a predefined timer (432), called logical link hold timer, to be started when an inactivity period (IP1, ..., IP3) of said terminal is detected at said fixed station,
said logical link controller (43) operable to release said logical link if said inactivity period (IP1, ..., IP3) has not terminated upon expiration of said logical link hold timer.

6. Fixed station according to claim 5, **characterized in that** it is a base station of said wireless communication network.

7. Terminal belonging to a wireless communication system comprising a logical link controller (43) for controlling a logical link between a fixed station of said wireless communication system and said terminal, said terminal being **characterized in that** it further comprises:
- an inactivity detector (431) to detect an inactivity period (IP1, ..., IP3) at said terminal;
- a predefined timer (432), called logical link hold timer, to be started when an inactivity period (IP1, ..., IP3) of said terminal is detected at said fixed station,
said logical link controller (43) operable to release said logical link if said inactivity period (IP1, ..., IP3) has not terminated upon expiration of said logical link hold timer.
